# EUROPÄISCHE PATENTSCHRIFT

(11) **EP 3 665 094 B1**
(45) Veröffentlichungstag und Bekanntmachung des Hinweises auf die Patenterteilung: **27.03.2024**
(21) Anmeldenummer: 18756393.7
(22) Anmeldetag: 09.08.2018
(51) Int. Cl.: B65D 8/00, A45F 3/18, B65D 47/20, B65D 51/18

(54) **TRINKFLASCHE**
DRINKING BOTTLE
BOUTEILLE

(30) Priorität: 10.08.2017 DE 102017213976
(43) Veröffentlichungstag der Anmeldung: 17.06.2020
(73) Patentinhaber: Oerding, Maura, 10627 Berlin (DE)
(72) Erfinder: Oerding, Maura, 10627 Berlin (DE)
(74) Vertreter: Maikowski & Ninnemann Patentanwälte Partnerschaft mbB
(86) Internationale Anmeldenummer: PCT/EP2018/071645
(87) Internationale Veröffentlichungsnummer: WO 2019/030333

(56) Entgegenhaltungen:
- EP-A2- 0 891 762
- DE-U1-202013 011 600
- KR-U- 19980 025 702
- US-A- 4 813 556
- US-A1- 2003 205 548
- US-A1- 2012 132 680
- US-A1- 2015 144 584

## Beschreibung

Trinkflaschen weisen üblicherweise einen Flaschenkörper mit einem Innenraum zur Aufnahme eines Getränks auf, das z.B. durch einen Trinkstutzen hindurch abgegeben werden kann. Insbesondere unterwegs und im sportlichen Bereich ist es üblich, den Trinkstutzen direkt an den Mund anzusetzen, um aus der Flasche zu trinken. Dabei hebt die trinkende Person einen Boden der Trinkflasche so weit an, dass das Getränk durch den Trinkstutzen fließen kann. Hierbei neigt die trinkende Person den Kopf in den Nacken. Je weiter das Getränk in der Trinkflasche zur Neige geht, desto steiler muss der Winkel sein, in den die Flasche anzuheben ist, was zu einer Trinkhaltung mit einem immer weiter nach hinten geneigten Kopf führt. Eine solche Trinkhaltung ist nicht nur unkomfortabel, denn je weiter der Kopf nach hinten geneigt ist, desto unangenehmer wird es zu schlucken. Eine derartige Trinkhaltung kann überdies auch Gefahren bergen, etwa wenn ein während der Fahrt trinkender Fahrradfahrer die Straße nur noch aus dem Augenwinkel sehen kann.

KR 1998-0025702 U beschreibt eine Flasche mit einem Balg, welcher es erlaubt, dass die Flasche verformt wird.

EP 0 891 762 A2 beschreibt eine Halterung mit mehreren relativ zueinander bewegbaren Komponenten, wobei in die Halterung eine Trinkflasche einsetzbar ist.

Die US 2015/0144584 A1 beschreibt eine Fütterflaschenvorrichtung, mit einer aus zwei zueinander beweglichen Teilen bestehenden Halterung für einen elastischen Flaschenbeutel.

In der DE 20 2013 011 600 U1 ist ein portabler Mischbehälter mit zum Mischen von Getränkekomponenten verdreh- und/oder verschiebbaren Behälterteilen beschrieben.

Es besteht die Aufgabe, eine Trinkflasche bereitzustellen, die einem Benutzer eine besonders komfortable Trinkhaltung erlaubt.

Diese Aufgabe wird durch eine Trinkflasche mit den Merkmalen des Anspruchs 1 gelöst.

Danach umfasst die Trinkflasche ein erstes Flaschenteil und ein zweites Flaschenteil. Beide Flaschenteile umfassen jeweils einen Innenraum, wobei der Innenraum zur Aufnahme und Aufbewahrung einer Flüssigkeit, nämlich eines Getränks, ausgebildet ist. Das zweite Flaschenteil umfasst ferner eine Flaschenöffnung. Die Flaschenöffnung ist zur Abgabe des Getränks an einen Benutzer der Trinkflasche ausgebildet. Die Flaschenöffnung ist oder umfasst z.B. eine Trinköffnung, insbesondere ein Trinkstutzen. Dabei ist vorgesehen, dass die Innenräume der beiden Flaschenteile miteinander in Fluidverbindung stehen oder bringbar sind. Das Getränk kann so von einem der beiden Flaschenteile in den anderen der beiden Falschenteile fließen und umgekehrt. Dabei ist vorgesehen, dass die Trinkflasche zumindest eine Konfiguration aufweist, in der die beiden Flaschenteile schräg und/oder angewinkelt zueinander verlaufen und/oder ausgerichtet sind. Hierbei kann insbesondere eine Symmetrieachse des ersten Flaschenteils schräg zu einer Symmetrieachse des zweiten Flaschenteils ausgerichtet sein. Beispielsweise ist die Flaschenöffnung koaxial zur Symmetrieachse des zweiten Flaschenteils angeordnet. Ferner ist vorgesehen, dass die beiden Flaschenteile relativ zueinander um eine Rotationsachse drehbar sind.

Durch die schräge Ausrichtung der Flaschenteile zueinander ist eine besonders komfortable Trinkhaltung möglich, denn während das zweite Flaschenteil mit der Flaschenöffnung in einem angenehm flachen Winkel an den Mund gehalten wird, kann das erste Flaschenteil in einem steileren Winkel aufrecht gehalten werden, sodass das Getränk zügig abgegeben werden kann.

Die beiden Flaschenteile können separate Materialstücke sein oder alternativ auch einstückig miteinander ausgebildet sein.

Die Trinkflasche weist eine aufrechte Konfiguration auf, in der die beiden Flaschenteile aufrecht angeordnet sind, insbesondere nicht schräg zueinander ausgerichtet sind. Es ist vorgesehen, dass die beiden Flaschenteile in beiden Konfigurationen (der schrägen und der aufrechten) in Fluidverbindung miteinander stehen, und es kann insbesondere vorgesehen sein, dass die beiden Flaschenteile stets miteinander in Fluidverbindung stehen.

Die Trinkflasche umfasst die Dreh- oder Schwenkverbindung zwischen den Flaschenteilen, durch die die beiden Flaschenteile relativ zueinander um die Rotationsachse dreh- oder schwenkbar sind. Dabei ist vorgesehen, dass die Rotationsachse schräg zu zumindest einem der beiden Flaschenteile ausgerichtet ist, optional zu beiden Flaschenteilen. Optional umfasst das erste Flaschenteil ein Verbindungsstück und das zweite Flaschenteil umfasst ein Verbindungsstück. Dabei können die Innenräume der Flaschenteile über die Verbindungsstücke miteinander in Fluidverbindung stehen oder bringbar sein. Durch die Verbindungsstücke können die beiden Flaschenteile aneinander befestigt sein.

Durch die schräge Ausrichtung der Rotationsachse kann die Trinkflasche von einer aufgerichteten Konfiguration in eine angewinkelte Konfiguration verdreht werden. In der aufrechten Konfiguration sind die beiden Flaschenteile z.B. (insbesondere koaxial) zueinander ausgerichtet. Dies ermöglicht einen Transport und/oder eine Aufbewahrung der Trinkflasche in gewohnter Weise. In der angewinkelten Konfiguration erstrecken sich die beiden Flaschenteile in einem Winkel (größer 0 Grad und kleiner 180 Grad) zueinander. In der angewinkelten Konfiguration ist eine besonders komfortable Trinkhaltung möglich.

Die Trinkflasche ist durch Verdrehen der beiden Flaschenteile zueinander um 180 Grad um die Rotationsachse von der aufgerichteten Konfiguration in die angewinkelte Konfiguration überführbar.

Der Innenraum des ersten Flaschenteils und der Innenraum des zweiten Flaschenteils bilden gemeinsam das Volumen der Trinkflasche. Die Innenräume der beiden Flaschenteile können unterschiedlich groß oder (im Wesentlichen) gleich groß sein. Beispielsweise trägt jeder der Innenräume beider Flaschenteile jeweils zumindest 10%, zumindest 20% oder zumindest 30% zum Fassungsvermögen der Trinkflasche bei.

Bevorzugt ist zumindest eines der beiden Flaschenteile entlang einer Längsachse längserstreckt. Alternativ oder zusätzlich bildet die Trinkflasche in zumindest einer Konfiguration, insbesondere in der aufgerichteten Konfiguration, die Längsachse aus. Die Rotationsachse verläuft schräg zur Längsachse.

Der Winkel zwischen der Rotationsachse und der Längsachse beträgt z.B. zwischen 20 und 60 Grad, insbesondere zwischen 30 und 40 Grad. Hierdurch sind angewinkelte Konfigurationen mit besonders komfortabler Trinkhaltung möglich.

Das erste Flaschenteil umfasst einen Boden, wobei der kleinste Abstand zwischen dem Boden und der Flaschenöffnung durch Verdrehen der beiden Flaschenteile relativ zueinander veränderbar ist. Beispielsweise ist der kleinste Abstand zwischen dem Boden und der Flaschenöffnung in der aufrechten Konfiguration der Trinkflasche maximal und in der angewinkelten Konfiguration der Trinkflasche minimal.

Zumindest eines der beiden Flaschenteile kann zumindest an einem Abschnitt zylinderförmig ausgebildet sein und eine Zylinderachse aufweisen. Dabei verläuft die Zylinderachse bevorzugt koaxial zur Längsachse und/oder definiert die Längsachse des jeweiligen Flaschenteils. Insbesondere ist hierbei eine kreiszylindrische Form möglich, wobei auch Zylinder mit von einem Kreis abweichenden Querschnittsformen denkbar sind. Die zylindrische Form kann schräg abgeschnitten sein.

Das erste Flaschenteil kann einen Dachabschnitt umfassen, an dem das Verbindungsstück des ersten Flaschenteils ausgebildet ist. Der Dachabschnitt erstreckt sich z.B. in einer zur Rotationsachse senkrechten Ebene. Das erste Flaschenteil umfasst einen Boden, der insbesondere schräg zum Dachabschnitt verlaufen kann, vorzugsweise im demselben Winkel, der zwischen der Rotationsachse und der Längsachse ausgebildet ist. Der Dachabschnitt liegt dem Boden gegenüber. Der Boden erstrecht sich z.B. in einer zur Längsachse senkrechten Ebene.

Das zweite Flaschenteil kann einen Bodenabschnitt umfassen, der sich benachbart und parallel zum Dachabschnitt des ersten Flaschenteils erstreckt. Der Bodenabschnitt kann sich am Dachabschnitt abstützen.

Die Schwenk- oder Drehverbindung kann durch die Verbindungsstücke der beiden Flaschenteile ausgebildet werden. Die Verbindungsstücke können somit sowohl die Fluidverbindung als auch die Schwenk- oder Drehverbindung bereitstellen.

Die beiden Verbindungsstücke bilden gemeinsam optional eine Schraubverbindung aus. Dies ermöglicht sowohl eine einfache Montage der Trinkflasche als auch eine sichere Drehbarkeit und Halterung.

Die Flaschenöffnung ist bevorzugt mittels eines Flaschenverschlusses flüssigdicht verschlossen.

An der Flaschenöffnung ist in einer Ausgestaltung der Trinkflasche ein als Flaschenverschluss dienendes Ventil angeordnet. Das Ventil umfasst z.B. eine mit der Trinkflasche verbundene oder verbindbare Basis, einen von der Basis abstehenden Zapfen, dessen Durchmesser (senkrecht zu einer Längserstreckungsrichtung des Zapfens) sich von der Basis hin zu einem von der Basis abgewandten Ende des Zapfens bis zu einem Enddurchmesser vergrößert, insbesondere zumindest abschnittsweise kontinuierlich. Das Ventil umfasst ferner eine bezüglich des Zapfens bewegbare Verschlussplatte, die eine Öffnung mit einem Öffnungsdurchmesser aufweist. Dabei ist der Öffnungsdurchmesser kleiner oder gleich dem Enddurchmesser des Zapfens. Das Ventil umfasst ferner ein federelastisches Element, welches sich an der Basis oder in der Nähe der Basis abstützt und die Verschlussplatte mit einer Federkraft in eine Verschlussstellung vorspannt, in der die Öffnung durch den Zapfen derart verschlossen ist, dass das Getränk in der Flasche nicht aus dem Ventil austreten kann. Dabei ist vorgesehen, dass die Verschlussplatte aus der Verschlussstellung heraus gegen die Federkraft des federelastischen Elements in eine Öffnungsstellung bewegbar ist, in der die Öffnung der Verschlussplatte zumindest teilweise freigegeben ist. Der freigegebene Öffnungsquerschnitt entspricht dem Querschnitt der Öffnung der Verschlussplatte abzüglich dem Querschnitt des Zapfens an der Stelle der Verschlussplatte.

Dieses Ventil ermöglicht eine besonders komfortable Abgabe des Getränks aus der Trinkflasche durch Ansetzen des Ventils an den Mund. Insbesondere ist eine einhändige Handhabung möglich, indem die Trinkflasche mit dem Ventil an den Mund angesetzt und zur Abgabe des Getränks lediglich gegen den Mund gedrückt wird. Das Ventil kann als Trinkstutzen dienen.

Anders als bei üblichen Trinkstutzen ermöglicht dieses Ventil, dass bei einem Drehen der Trinkflasche und beim Halten der Trinkflasche in der gedrehten Position, in der der Boden der Flasche höher liegt als die Flaschenöffnung, kein Getränk aus der Trinkflasche ungewollt austritt.

Das Ventil umfasst optional einen Außenring, der den Zapfen von außen in einer Umfangsrichtung umgibt, wobei der Zapfen den Außenring in axialer Richtung des Zapfens überragt. Beispielsweise sind der Außenring und der Zapfen koaxial zueinander ausgerichtet. Der Außenring schützt das federelastische Element und kann einen Anschlag für die Öffnungsstellung bereitstellen.

Optional umfasst das Ventil einen Schlauch, der den Zapfen umgibt, insbesondere aufnimmt, und sich durch die Öffnung der Verschlussplatte hindurch erstreckt. Dieser Schlauch kann als Trinkschlauch dienen und es einem Benutzer erleichtern, aus der Trinkflasche zu trinken. Der Schlauch ist z.B. flexibel. Es kann vorgesehen sein, dass die Verschlussplatte den Schlauch in der Verschlussstellung gegen den Zapfen drückt, sodass die Trinkflasche flüssigkeitsdicht verschlossen ist.

Ferner wird ein Ventil für eine Trinkflasche beschrieben.

Ein solches Ventil für eine Trinkflasche, insbesondere für eine Trinkflasche nach einer beliebigen hierin beschriebenen Ausgestaltung, umfasst eine mit der Trinkflasche verbundene oder verbindbare Basis, einen von der Basis abstehenden Zapfen, dessen Durchmesser sich zu einem von der Basis abgewandten Ende des Zapfens hin bis zu einem Enddurchmesser vergrößert (insbesondere zumindest abschnittsweise kontinuierlich), eine bezüglich des Zapfens bewegbare Verschlussplatte, die eine Öffnung mit einem Öffnungsdurchmesser aufweist, der kleiner oder gleich dem Enddurchmesser des Zapfens ist, und ein federelastisches Element, welches sich an der Basis abstützt und die Verschlussplatte mit einer Federkraft in eine Verschlussstellung vorspannt, in der die Öffnung durch den Zapfen verschlossen ist. Dabei ist die Verschlussplatte aus der Verschlussstellung heraus gegen die Federkraft des federelastischen Elements in eine Öffnungsstellung bewegbar, in der die Öffnung der Verschlussplatte zumindest teilweise freigegeben ist.

Dieses Ventil ermöglicht eine besonders komfortable Abgabe des Getränks aus der Trinkflasche durch Ansetzen des Ventils an den Mund. Insbesondere ist eine einhändige Handhabung möglich, indem die Trinkflasche mit dem Ventil an den Mund angesetzt und zur Abgabe des Getränks lediglich gegen den Mund gedrückt wird.

Das Ventil kann wie zuvor im Zusammenhang mit der Trinkflasche beschrieben ausgebildet sein.

Die Erfindung wird nachfolgend unter Bezugnahme auf die Figuren anhand von Ausführungsbeispielen näher erläutert werden. Es zeigen in schematischen Darstellungen:
- Fig. 1A-1C: verschiedene Ansichten eines Ausführungsbeispiels einer Trinkflasche mit zwei relativ zueinander drehbaren Flaschenteilen mit einer Schraubverbindung;
- Fig. 2A-2B: verschiedene Ansichten eines Ausführungsbeispiels einer Trinkflasche mit zwei relativ zueinander drehbaren Flaschenteilen mit einem Trichter;
- Fig. 3: ein Ausführungsbeispiel einer Trinkflasche mit zwei relativ zueinander drehbaren Flaschenteilen mit einer Rastverbindung;
- Fig. 4: ein Ausführungsbeispiel einer Trinkflasche mit zwei relativ zueinander drehbaren Flaschenteilen mit einer Schraubverbindung, die sich in einen Innenraum eines der Flaschenteile in Richtung einer Flaschenöffnung erstreckt;
- Fig. 5A-5C: verschiedene Ansichten eines Ventils der Trinkflaschen gemäß Fig. 1A-4; und
- Fig. 6A-6C: verschiedene Ansichten eines Ventils der Trinkflaschen gemäß Fig. 1A-4 mit einem zusätzlichen Schlauch.

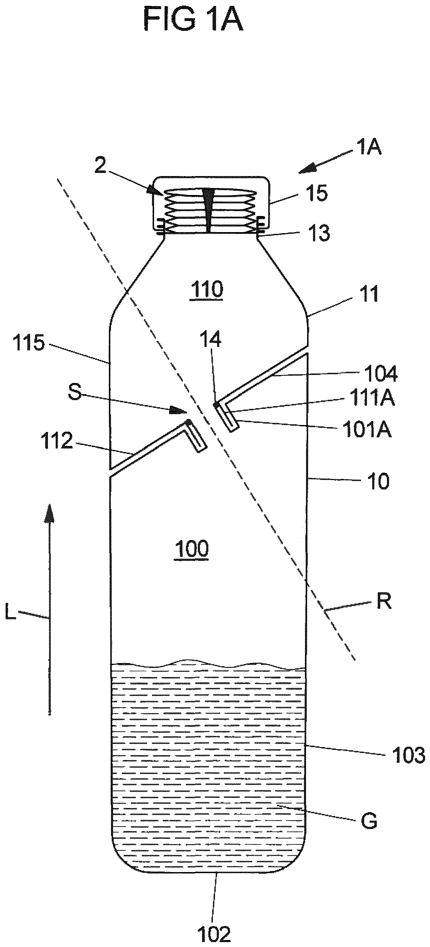

Fig. 1A zeigt eine aufrecht stehende Trinkflasche 1A mit zwei Flaschenteilen, nämlich einem unteren ersten Flaschenteil 10 und einem oberen zweiten Flaschenteil 11. Die Trinkflasche 1A dient zur Aufbewahrung und Abgabe eines Getränks G an einen Benutzer.

Am ersten Flaschenteil 10 ist ein Boden 102 der Trinkflasche 1A ausgebildet. Am zweiten Flaschenteil 11 ist eine Flaschenöffnung 13 der Trinkflasche 1A ausgebildet. In der in Fig. 1A gezeigten Konfiguration sind der Boden 102 und die Flaschenöffnung 13 an gegenüberliegenden längsseitigen Enden der Trinkflasche 1A angeordnet.

Das erste Flaschenteil 10 umfasst eine umlaufende Wandung 103. Gemeinsam mit dem Boden 102 und einem dem Boden 102 gegenüberliegenden Dachabschnitt 104 definiert die Wandung 103 einen Innenraum 100. Der Innenraum 100 ist zur Aufnahme einer Flüssigkeit, vorliegend des Getränks G ausgebildet.

Das zweite Flaschenteil 11 umfasst ebenfalls eine umlaufende Wandung 115. Die Wandung 115 und die Flaschenöffnung 13 definieren gemeinsam mit einem der Flaschenöffnung 13 gegenüberliegenden Bodenabschnitt 112 einen weitere Innenraum 110. Die Flaschenöffnung 13 ist durch ein Ventil 2 verschlossen. Das Ventil 2 dient als Trinkstutzen und kann durch den Benutzer der Trinkflasche 1A geöffnet werden. Das Ventil 2 ist durch einen das Ventil 2 überdeckenden Deckel 15 geschützt.

Die Wandungen 103, 115 der beiden Flaschenteile 10, 11 sind im Wesentlichen zylinderförmig, vorliegend kreiszylinderförmig, wobei auch andere Formen denkbar sind. In der in Fig. 1A gezeigten Konfiguration verlaufen die Zylinderachsen der beiden Flaschenteile 10, 11 koaxial zueinander.

Jedes der beiden Flaschenteile 10, 11 umfasst ein Verbindungsstück 101A, 111A, vorliegend jeweils mit einem Gewinde. Das Gewinde des Verbindungsstücks 101A des ersten Flaschenteils 10 steht mit dem Gewinde des Verbindungsstücks 111A des zweiten Flaschenteils 11 in Eingriff. Beide Verbindungsstücke 101A, 111A sind in Form einer Buchse ausgebildet, wobei eines der beiden Verbindungsstücke 101A, 111A (vorliegend das des zweiten Flaschenteils 11) von dem anderen Verbindungsstück 101A, 111A aufgenommen ist.

Durch die Verbindungsstücke 101A, 111A hindurch stehen die beiden Innenräume 100, 110 der Flaschenteile 10, 11 miteinander in Fluidverbindung, sodass bei jeweils entsprechender Neigung der Trinkflasche 1A das Getränk G von dem ersten in den zweiten Flaschenteil 10, 11 fließen kann und umgekehrt. Eine zwischen den Verbindungsstücken 101A, 111A (umlaufend) angeordnete Dichtung 14 verhindert ein ungewolltes Austreten des Getränks an den Verbindungsabschnitten 101A, 111A.

Hält der Benutzer die Trinkflasche 1A so, dass der Boden 102 deutlich höher liegt als die Flaschenöffnung 13, so kann bei geöffnetem Ventil 2 das Getränk aus der Trinkflasche 1A abgegeben werden. In der in Fig. 1A gezeigten Konfiguration kann das zu einer unbequemen Trinkhaltung mit weit in den Nacken geworfenem Kopf führen, insbesondere wenn das Getränk G zur Neige geht.

Daher weist die Trinkflasche 1A eine Schwenkverbindung S auf. Die Schwenkverbindung S wird vorliegend gebildet durch die beiden Verbindungsstücke 101A, 111A der Flaschenteile 10, 11, konkret durch deren miteinander in Eingriff stehenden Gewinde. Mittels der Schwenkverbindung S sind die beiden Flaschenteile 10, 11 relativ zueinander drehbar. Die Drehung erfolgt bezüglich einer Rotationsachse R, die durch die Anordnung der Verbindungsabschnitte 101A, 111A definiert wird.

Die Rotationsachse R verläuft schräg zu beiden Flaschenteilen 10, 11. Hierdurch kann die Trinkflasche 1A in eine von ihrer in Fig. 1A gezeigten aufgerichteten Konfiguration in eine angewinkelte Konfiguration verschwenkt werden, wie weiter unten erläutert werden wird.

Die Verbindungsabschnitte 101A, 111A sind jeweils am Dachabschnitt 104 bzw. am Bodenabschnitt 112 der beiden Flaschenteile 10, 11 ausgebildet, im vorliegenden Beispiel jeweils mittig am Dachabschnitt 104 bzw. am Bodenabschnitt 112. Der Dachabschnitt 104 und der Bodenabschnitt 112 verlaufen in etwa parallel zueinander. Konkret sind sowohl der Dachabschnitt 104 als auch der Bodenabschnitt 112 im Wesentlichen eben.

Die Verbindungsabschnitte 101A, 111A erstrecken sich jeweils in einer Richtung senkrecht zur Ebene des Dachabschnitts 104 bzw. des Bodenabschnitts 112, stehen insbesondere senkrecht dazu davon ab.

Der Dachabschnitt 104 und der Bodenabschnitt 112 sind jeweils schräg am ersten bzw. zweiten Flaschenteil 10, 11 angeordnet. Der Bodenabschnitt 112 erstreckt sich in einer Ebene, die schräg (z.B. in einem Winkel von 25 bis 35 Grad, insbesondere etwa 30 Grad) zur Zylinderachse des ersten Flaschenteils 10 verläuft. Der Dachabschnitt 104 erstreckt sich in einer Ebene, die schräg zur Zylinderachse des zweiten Flaschenteils 11 verläuft (insbesondere im selben Winkel wie der Dachabschnitt 104 zur Zylinderachse des ersten Flaschenteils 10).

Die Rotationsachse R verläuft senkrecht zum Dachabschnitt 104 und zum Bodenabschnitt 112. Somit verläuft die Rotationsachse R schräg zur Zylinderachse des ersten und des zweiten Flaschenteils 10, 11. Vorliegend verläuft die Rotationsachse R schräg zu einer Längsachse L des ersten Flaschenteils 10. Die Längsachse L erstreckt sich längs entlang der Längserstreckungsrichtung des ersten Flaschenteils 10 (und/oder koaxial zu dessen Zylinderachse).

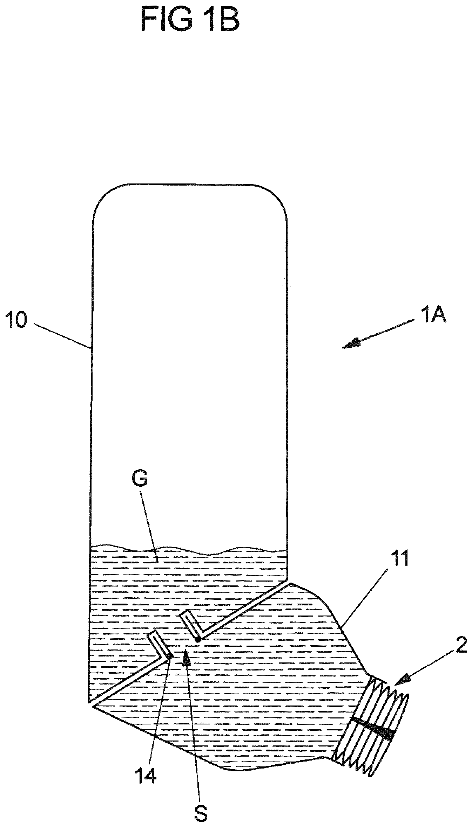

Fig. 1B zeigt die angewinkelte Konfiguration der Trinkflasche 1A. Gegenüber der in Fig. 1A gezeigten aufgerichteten Konfiguration sind die beiden Flaschenteile 10, 11 um 180 Grad zueinander verschwenkt. Durch den schrägen Verlauf der Rotationsachse R stehen die Zylinderachsen der beiden Flaschenteile 10, 11 in einem Winkel zueinander. Hält der Benutzer die Trinkflasche 1A in dieser angewinkelten Konfiguration an den Mund, ist eine wesentlich komfortablere Trinkhaltung möglich, bei der der Kopf vergleichsweise aufrecht gehalten werden kann. Hierbei hält der Benutzer das erste Flaschenteil 10 in einem steileren Winkel zur Waagrechten als das zweite Flaschenteil 11.

Die Trinkflasche 1A weist somit eine aufgerichtete Konfiguration und eine angewinkelte Konfiguration auf. In der angewinkelten Konfiguration ist der Abstand zwischen dem Boden 102 und der Flaschenöffnung 13 kleiner als in der aufgerichteten Konfiguration.

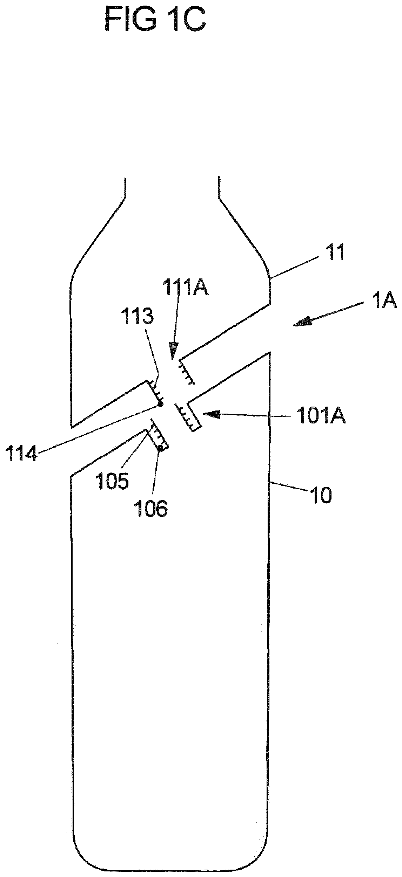

Fig. 1C zeigt die beiden Flaschenteile 10, 11 in einem auseinandergeschraubten Zustand. Hier ist zu erkennen, dass das Gewinde 105 des ersten Flaschenteils als Außengewinde ausgebildet ist und das Gewinde 113 des zweiten Flaschenteils 11 als Innengewinde. Ferner zeigt Fig. 1C einen Anschlag 106, der am Verbindungsstück 101A des ersten Flaschenteils 10 vorgesehen ist und der mit einem Gegenanschlag 114 (oder mehreren in Drehrichtung versetzt zueinander angeordneten Gegenanschlägen) am Verbindungsstück 111A des zweiten Flaschenteils 11 kooperiert. Der Anschlag 106 und der Gegenanschlag 114 begrenzen den maximalen Drehwinkel der Flaschenteile zueinander auf 180 Grad.

Auf diese Weise wird ein versehentliches Lösen der Flaschenteile 10, 11 voneinander vermieden.

Zumindest eines der beiden Flaschenteile 10, 11 ist einstückig ausgebildet. Vorzugsweise sind beide Flaschenteile 10, 11 jeweils einstückig ausgebildet.

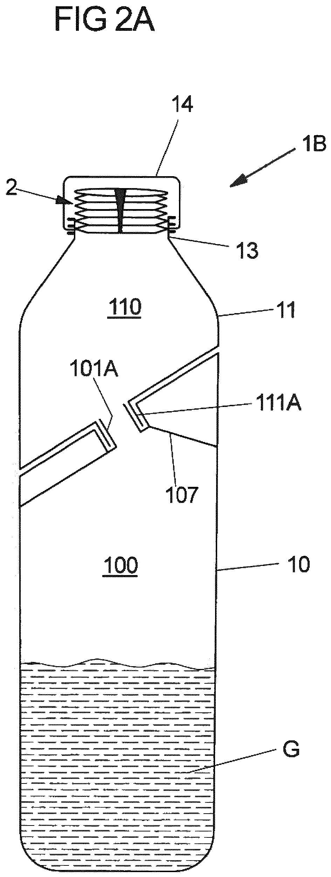

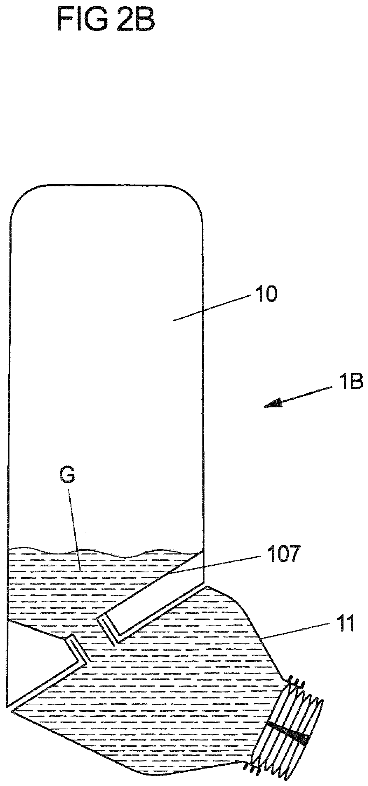

Die Fig. 2A und 2B zeigen eine Trinkflasche 1B, die ähnlich der Trinkflasche gemäß Fig. 1A-1C ausgebildet ist. Die Trinkflasche 1B gemäß Fig. 2A (aufgerichtete Konfiguration) und 2B (angewinkelte Konfiguration) umfasst zusätzlich eine Innenwand 107, welche verhindert, dass ein Teil des Getränks G bei der Abgabe in der angewinkelten Konfiguration (siehe Fig. 2B) im ersten Flaschenteil 10 zurückbleibt. Die Innenwand 107 ist vorliegend trichterförmig ausgebildet.

Gemäß Fig. 2A und 2B erstecken sich die Verbindungsstücke 101A, 111A vom Dachabschnitt 104 bzw. Bodenabschnitt 112 ausgehend in den Innenraum 100 des ersten Flaschenteils 10. Die Innenwand 107 ist an einem dem Dachabschnitt 104 abgewandten Ende des Verbindungsstücks 101A des ersten Flaschenteils fest verbunden und erstreckt sich von dort umlaufend bis zur Wandung 103 des ersten Flaschenteils 10.

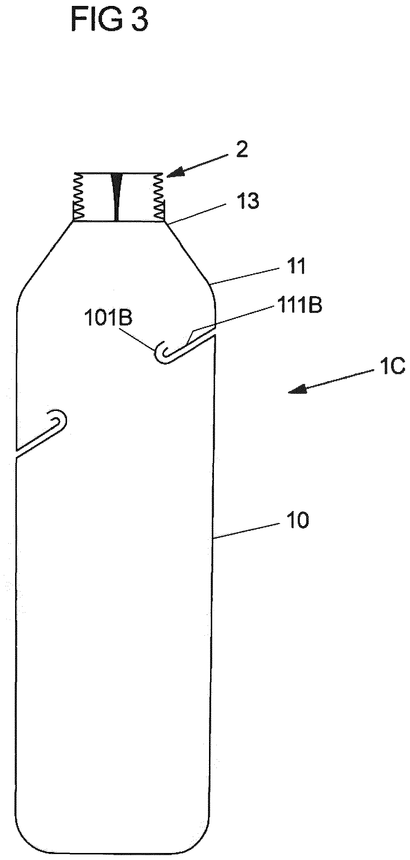

Fig. 3 zeigt eine weitere Trinkflasche 1C, die ähnlich der Trinkflasche gemäß Fig. 1A-1C ausgebildet ist. Verglichen damit umfasst sie aber anders ausgebildete Verbindungsstücke 101B, 111B. Die Verbindungsstücke 101B, 111B des ersten und zweiten Flaschenteils 10, 11 gemäß Fig. 3 sind in Form einer Rastverbindung ausgebildet. Zur Montage werden die beiden Verbindungsstücke 101B, 111B miteinander verrastet. Dies ermöglicht eine einfache und zugleich sichere Verbindung. Innerhalb der Verbindungsstücke 101B, 111B ist wie bei den Verbindungsstücken 101A, 111A gemäß Fig. 1A-2B eine Öffnung ausgebildet, durch die hindurch die Innenräume 100, 110 der Flaschenteile 10, 11 miteinander verbunden sind. Der Durchmesser der Öffnung der Trinkflasche 1C gemäß Fig. 3 beträgt in einer Richtung mehr als 80 %, insbesondere mehr als 90 % des Durchmessers des ersten Flaschenteils 10 und/oder des zweiten Flaschenteils 11. Eine entsprechend groß dimensionierte Öffnung ist auch bei den Trinkflaschen 1A-1B gemäß Fig. 1A-2B möglich.

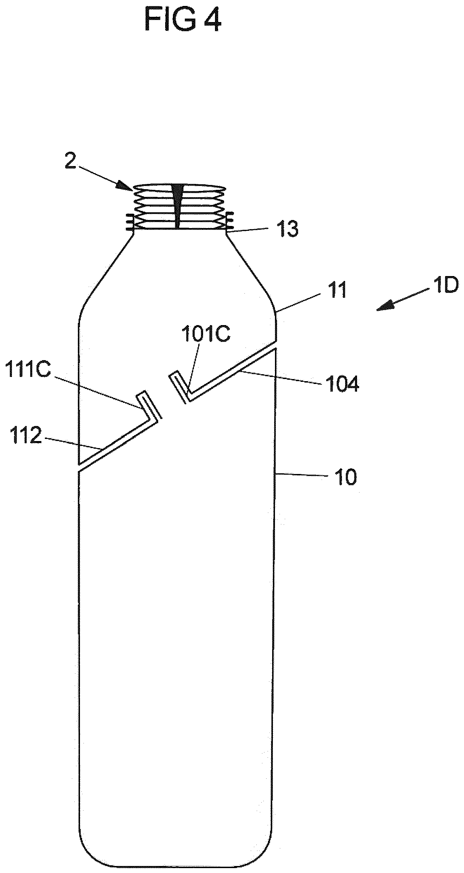

Fig. 4 zeigt eine weitere Trinkflasche 10, die ähnlich der Trinkflasche gemäß Fig. 1A-1C ausgebildet ist. Als einziger Unterschied erstrecken sich die Verbindungsstücke 101C, 111C der Trinkflasche 1D gemäß Fig. 4 ausgehend vom Dachabschnitt 104 und vom Bodenabschnitt 102 in den Innenraum des zweiten Flaschenteils 11. Hierdurch kann weitgehend vermieden werden, dass in der angewinkelten Konfiguration Teile des Getränks G durch die Verbindungsstücke 101C, 111C im ersten Flaschenteil 10 zurückbehalten werden.

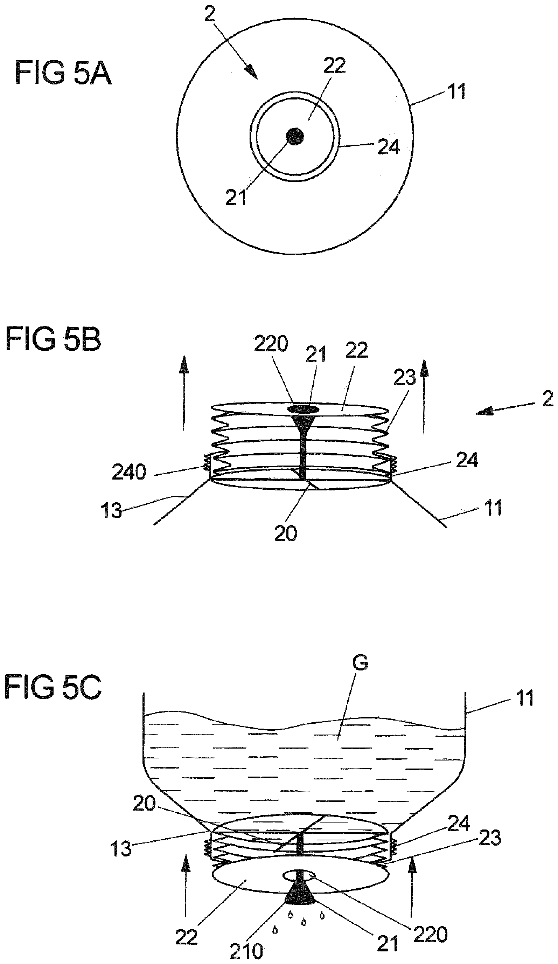

Fig. 5A-5C zeigen mehr Details des bereits erwähnten Ventils 2 der Trinkflaschen 1A-1D gemäß Fig. 1A-4. Dabei zeigt Fig. 5A eine Draufsicht von oben auf das Ventil und das zweite Flaschenteil 11 der Trinkflasche 1A-1D. Fig. 5B zeigt eine teilweise aufgeschnittene Ansicht von der Seite und Fig. 5C zeigt eine Gebrauchsposition, ebenfalls in einer teilweise aufgeschnittenen, seitlichen Ansicht.

Das Ventil 2 umfasst eine Basis 20, welche im gezeigten Beispiel in Form eines Kreuzes aus Stegen gebildet ist. Die Basis 20 ist fest mit dem zweiten Flaschenteil 11 verbindbar oder verbunden, z.B. einstückig damit ausgebildet. Die Basis 20 ist innerhalb der Flaschenöffnung 13 angeordnet.

Von der Basis 20 ausgehend erstreckt sich ein Zapfen 21 weg vom Innenraum 110 des zweiten Flaschenteils 11. Der Zapfen 21 ist vorliegend am Kreuzungspunkt der Stege der Basis 20 festgelegt, z.B. einstückig daran angeformt. Der Zapfen 21 verbreitert sich ausgehend von der Basis 20 hin zu einem der Basis 20 abgewandten Ende 210, vorliegend kontinuierlich in einem an das Ende 210 angrenzenden Abschnitt. Der Zapfen 21 ist länglich. Optional kann sich der Zapfen 21 über seine gesamte Länge kontinuierlich verbreitern.

Das Ventil 2 umfasst ferner ein federelastisches Element in Form eines Balges 23, der (vollständig) umlaufend mit dem Rand der Flaschenöffnung 13 dicht verbunden ist, sodass zwischen Balg 23 und Flaschenöffnung 13 kein Getränk G austreten kann. An einem der Basis 20 abgewandten Ende des Balges ist eine Verschlussplatte 22 mit dem Balg (vollständig umlaufend) verbunden. Die Verbindung ist dicht und umlaufend. Die Verschlussplatte 22 ist im vorliegenden Beispiel in Form einer Kreisscheibe ausgebildet. Die Verschlussplatte 22 weist eine Öffnung 220 auf, die vorliegend mittig an der Verschlussplatte 22 angeordnet ist. Die Öffnung 220 ist kleiner oder höchstens gleichgroß wie der Zapfen 21 im Bereich seines Endes 220 (und weist in etwa dieselbe Querschnittsform auf). Die Öffnung 220 und der Zapfen 21 sind koaxial zueinander ausgerichtet.

Wie in Fig. 5B gezeigt, drückt der Balg 23 die Verschlussplatte 22 federelastisch (entlang der Pfeile) gegen den Zapfen 21. Dabei wird der Rand der Öffnung 220 der Verschlussplatte 22 gegen den Zapfen 21 gepresst. Die Öffnung 220 der Verschlussplatte 22 wird dabei durch den gleichgroßen oder (geringfügig) größeren Zapfen 21 an seinem Ende 210 flüssigkeitsdicht verschlossen.

Aus der in Fig. 5B gezeigten Verschlussstellung kann das Ventil 2 in eine Öffnungsstellung überführt werden, indem die Verschlussplatte 22 gegen die Federkraft des Balges 23 (allgemein des federelastischen Elements) in Richtung der Basis 20 bewegt wird (mit Pfeilen in Fig. 5C angedeutet). Dies kann z.B. durch Ansetzen der Trinkflasche 1A-1D an den Mund des Benutzers erfolgen, was insbesondere bereits einhändig möglich ist. Hierbei werden Faltungen des Balges 23 enger zusammen gedrückt. Entfällt eine äußere Krafteinwirkung auf die Verschlussplatte 22, wird diese durch den Balg 23 automatisch von der Öffnungsstellung in die Verschlussstellung bewegt. Die Faltungen des Balges 23 weiten sich dabei.

Hierdurch wird verhindert, dass beim Drehen und Halten der Trinkflasche 1A-1D mit der Flaschenöffnung 13 nach unten Getränk G ungewollt austritt. Erst durch Ansetzen des Ventils 2 an den Mund wird Getränk G abgegeben.

Fig. 5C zeigt das Ventil 2 in der Öffnungsstellung. Da der Zapfen 21 in Richtung zur Basis 20 einen geringeren Durchmesser aufweist als an seinem Ende 210, verschließt der Zapfen die Öffnung der Verschlussplatte 22 nicht mehr vollständig. Durch die teilweise freigegebene Öffnung 220 kann nun Getränk G abgegeben werden.

Zum Schutz von Teilen des Ventils 2 ist ein Außenring 24 vorgesehen, der den Balg 23 außen umgibt. Am Außenring 24 ist ferner ein Gewinde 240 oder dergleichen für den Deckel 15 vorgesehen. Der Außenring 24 wird entlang der Längsrichtung des Zapfens 21 in Richtung weg von der Basis 20 vom Zapfen 21 überragt. Der Außenring 24 dient optional als Anschlag für die Verschlussplatte 22, wenn die Verschlussplatte 22 von der Verschlussstellung in die Öffnungsstellung bewegt wird.

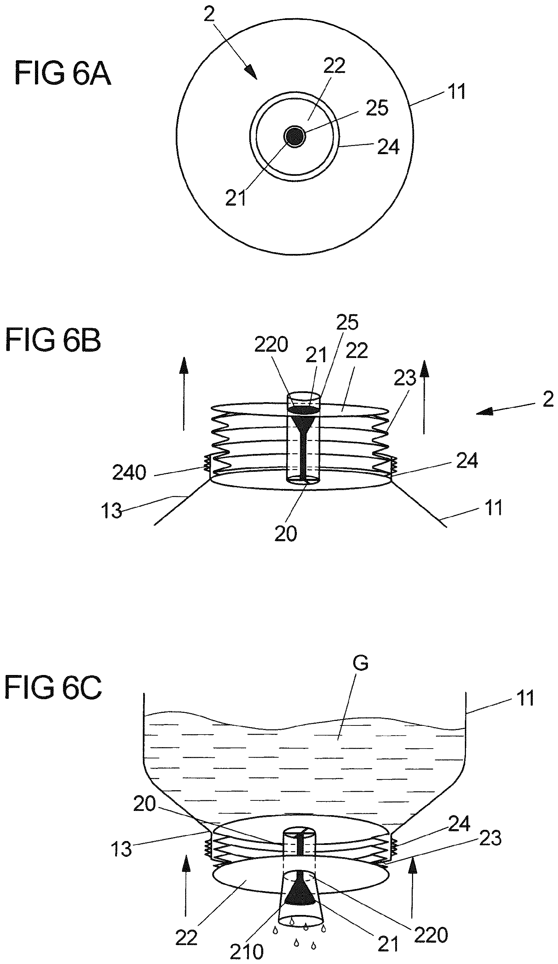

Gemäß Fig. 6A-6C ist das Ventil 2 zusätzlich mit einem Schlauch 25 versehen. Der Schlauch 25 nimmt den Zapfen 21 in sich auf. Der Schlauch 25 erstreckt sich von der Basis 20 durch die Öffnung 220 der Verschlussplatte 22 hindurch (sowohl in der Verschlussstellung als auch in der Öffnungsstellung.

Der Schlauch 25 ist flexibel (z.B. aus Silikon oder dergleichen hergestellt). In der Verschlussstellung (siehe insbesondere Fig. 6B) komprimiert die Verschlussplatte 22 den Schlauch 25 und drückt ihn gegen den Zapfen 21. Der Schlauch dichtet die Verschlussplatte 22 gegenüber dem Zapfen 21 ab.

In der Öffnungsstellung (siehe insbesondere Fig. 6C) drückt die Verschlussplatte 22 den Schlauch 25 nicht gegen den Zapfen 21. Das freie Ende des Schlauchs 25 wird somit nicht komprimiert und ist infolge der Elastizität des Schlauchs 25 (gegenüber der Verschlussstellung) geweitet. So entsteht ein Abstand zwischen dem Zapfen 21 und dem Schlauch 25, durch den hindurch das Getränk G abgegeben werden kann. Der Schlauch 25 ist ein Trinkschlauch.

Optional ist die Basis 20 außerhalb des Schlauchs 25 verschlossen, um eine Reinigung der Trinkflasche zu erleichtern.

### Bezugszeichenliste

- 1A-1D: Trinkflasche
- 10: erstes Flaschenteil
- 100: Innenraum
- 101A-101C: Verbindungsstück
- 102: Boden
- 103: Wandung
- 104: Dachabschnitt
- 105: Gewinde
- 106: Anschlag
- 107: Innenwand
- 11: zweites Flaschenteil
- 110: Innenraum
- 111A-111C: Verbindungsstück
- 112: Bodenabschnitt
- 113: Gewinde
- 114: Gegenanschlag
- 115: Wandung
- 13: Flaschenöffnung
- 14: Dichtung
- 15: Deckel
- 2: Ventil
- 20: Basis
- 21: Zapfen
- 210: Ende
- 22: Verschlussplatte
- 220: Öffnung
- 23: Balg (federelastisches Element)
- 24: Außenring
- 25: Schlauch
- 240: Gewinde
- S: Schwenkverbindung
- G: Getränk
- L: Längsachse
- R: Rotationsachse

## Patentansprüche

1. Trinkflasche, umfassend:
- ein erstes Flaschenteil (10) mit einem Innenraum (100) zur Aufnahme eines Getränks (G) und
- ein zweites Flaschenteil (11) mit einem Innenraum (110) zur Aufnahme des Getränks (G) und mit einer Flaschenöffnung (13) zur Abgabe des Getränks (G) aus dem Innenraum (110),
wobei:
- die Innenräume (100, 110) der beiden Flaschenteile (10, 11) miteinander in Fluidverbindung stehen oder bringbar sind und wobei die Trinkflasche (1A-1D) zumindest eine Konfiguration aufweist, in der die beiden Flaschenteile (10, 11) schräg zueinander verlaufen, und eine aufrechte Konfiguration aufweist, wobei die beiden Flaschenteile (10, 11) in beiden Konfigurationen in Fluidverbindung miteinander stehen,
- die Trinkflasche (1A-1D) eine Dreh- oder Schwenkverbindung (S) zwischen den Flaschenteilen (10, 11) umfasst, durch die die beiden Flaschenteile (10, 11) relativ zueinander um eine schräg zu zumindest einem der beiden Flaschenteile (10, 11) verlaufende Rotationsachse (R) dreh- oder schwenkbar sind, und
- die Trinkflasche durch Verdrehen der beiden Flaschenteile (10, 11) zueinander um 180 Grad um die Rotationsachse (R) von der aufgerichteten Konfiguration in die angewinkelte Konfiguration überführbar ist.

2. Trinkflasche nach Anspruch 1, **dadurch gekennzeichnet, dass** das erste Flaschenteil (10) ein Verbindungsstück (101A-101C) umfasst und das zweite Flaschenteil (11) ein Verbindungsstück (111A-111C) umfasst, wobei die Innenräume (100, 110) über die Verbindungsstücke (101A-101C, 111A-111C) der beiden Flaschenteile (10, 11) miteinander in Fluidverbindung stehen.

3. Trinkflasche nach Anspruch 2, **dadurch gekennzeichnet, dass** die beiden Flaschenteile (10, 11) über die Verbindungsstücke (101A-101C, 111A-111C) aneinander befestigt sind.

4. Trinkflasche nach einem der vorhergehenden Ansprüche, **dadurch gekennzeichnet, dass** die Rotationsachse (R) schräg zu einer Längsachse (L) zumindest eines der beiden Flaschenteile (10, 11) verläuft.

5. Trinkflasche nach Anspruch 5, **dadurch gekennzeichnet, dass** der Winkel zwischen der Rotationsachse (R) und der Längsachse (L) zwischen 20 und 60 Grad beträgt, insbesondere zwischen 30 und 40 Grad.

6. Trinkflasche nach einem der vorhergehenden Ansprüche, **dadurch gekennzeichnet, dass** das erste Flaschenteil (10) einen Boden (102) umfasst, wobei der kleinste Abstand zwischen dem Boden (102) und der Flaschenöffnung (13) veränderbar ist durch Schwenken der Flaschenteile (10, 11) relativ zueinander.

7. Trinkflasche nach einem der vorhergehenden Ansprüche, **dadurch gekennzeichnet, dass** zumindest eines der beiden Flaschenteile (10, 11) zumindest abschnittsweise zylinderförmig mit einer Zylinderachse ausgebildet ist, wobei die Zylinderachse koaxial zu einer Längsachse (L) zumindest eines der beiden Flaschenteile (10, 11) verläuft.

8. Trinkflasche nach einem der vorangehenden Ansprüche, soweit rückbezogen auf Anspruch 3, **dadurch gekennzeichnet, dass** das erste Flaschenteil (10) einen Dachabschnitt (104) umfasst, an dem das Verbindungsstück (101A-101C) des ersten Flaschenteils (10) ausgebildet ist und der schräg zu einem Boden (102) des ersten Flaschenteils (10) verläuft.

9. Trinkflasche nach Anspruch 8, **dadurch gekennzeichnet, dass** das zweite Flaschenteil (11) einen Bodenabschnitt (112) umfasst, der sich benachbart und parallel zum Dachabschnitt (104) des ersten Flaschenteils (10) erstreckt.

10. Trinkflasche nach einem der vorhergehenden Ansprüche, soweit rückbezogen auf Anspruch 3, **dadurch gekennzeichnet, dass** die Verbindungsstücke (101A-101C, 111A-111C) der beiden Flaschenteile (10, 11) gemeinsam die Schwenkverbindung (S) ausbilden.

11. Trinkflasche nach einem der vorangehenden Ansprüche, soweit rückbezogen auf Anspruch 3, **dadurch gekennzeichnet, dass** die beiden Verbindungsstücke (101A-101C, 111A-111C) eine Schraubverbindung ausbilden.

## Claims

1. A drinking bottle, comprising:
- a first bottle part (10) having an interior (100) for receiving a beverage (G), and
- a second bottle part (11) having an interior (110) for receiving the beverage (G) and having a bottle opening (13) for dispensing the beverage (G) from the interior (110),
wherein:
- the interiors (100, 110) of the two bottle parts (10, 11) are or can be brought into fluid communication with each other, and wherein the drinking bottle (1A-1D) has at least one configuration in which the two bottle parts (10, 11) are inclined to each other and has an upright configuration, wherein the two bottle parts (10, 11) are in fluid communication with each other in both configurations,
- the drinking bottle (1A-1D) has a rotation or pivotal connection (S) by means of which the two bottle parts (10, 11) are rotatable or pivotable relative to one another about an axis of rotation (R), the axis of rotation (R) extending obliquely to at least one of the two bottle parts (10, 11), and
- drinking bottle (1A-1D) can be transferred from the upright configuration to the angled configuration by rotating the two bottle parts (10, 11) 180 degrees relative to each other about the axis of rotation (R).

2. The drinking bottle according to claim 1, **characterized in that** the first bottle part (10) comprises a connector (101A-101C) and the second bottle part (11) comprises a connector (111A-111C), wherein the interiors (100, 110) are in fluid communication with each other via the connectors (101A-101C, 111A-111C) of the two bottle parts (10, 11).

3. The drinking bottle according to claim 2, **characterized in that** the two bottle parts (10, 11) are mounted to one other by the connectors (101A-101C, 111A-111C).

4. The drinking bottle according to any of the preceding claims, **characterized in that** the axis of rotation (R) is inclined to a longitudinal axis (L) of at least one of the two bottle parts (10, 11).

5. The drinking bottle according to claim 5, **characterized in that** the angle between the axis of rotation (R) and the longitudinal axis (L) is between 20 and 60 degrees, in particular between 30 and 40 degrees.

6. The drinking bottle according to any of the preceding claims, **characterized in that** the first bottle part (10) comprises a bottom (102), wherein the smallest distance between the bottom (102) and the bottle opening (13) is variable by pivoting the bottle parts (10, 11) relative to each other.

7. The drinking bottle according to any of the preceding claims, **characterized in that** at least one of the two bottle parts (10, 11) is formed cylindrically with a cylinder axis at least in sections, the cylinder axis extending coaxially to a longitudinal axis (L) of at least one of the two bottle parts (10, 11).

8. The drinking bottle according to any of the preceding claims, as far as based on claim 3, **characterized in that** the first bottle part (10) comprises a roof portion (104) on which the connector (101A-101C) of the first bottle part (10) is formed and which extends inclined with respect to a bottom (102) of the first bottle part (10).

9. The drinking bottle according to claim 8, **characterized in that** the second bottle part (11) comprises a bottom section (112) extending adjacent and parallel to the top portion (104) of the first bottle part (10).

10. The drinking bottle according to any of the preceding claims, as far as based on claim 3, **characterized in that** the connectors (101A-101C, 111A-111C) of the two bottle parts (10, 11) together form the swivel joint (S).

11. The drinking bottle according to any of the preceding claims, as far as based on claim 3, **characterized in that** the two connectors (101A-101C, 111A-111C) form a screw connection.

## Revendications

1. Gourde, comprenant :
- une première partie de bouteille (10) avec un espace intérieur (100) destiné à recevoir une boisson (G) et
- une seconde partie de bouteille (11) avec un espace intérieur (110) destiné à recevoir la boisson (G) et avec une ouverture de bouteille (13) destinée à distribuer la boisson (G) provenant de l'espace intérieur (110),
dans laquelle :
- les espaces intérieurs (100, 110) des deux parties de bouteille (10, 11) sont ou peuvent être amenés en communication fluidique l'un avec l'autre et dans laquelle la bouteille (1A - 1D) présente au moins une configuration, dans laquelle les deux parties de bouteille (10, 11) s'étendent de manière oblique l'une par rapport à l'autre, et présente une configuration debout, dans laquelle les deux parties de bouteille (10, 11) sont en communication fluidique l'une avec l'autre dans les deux configurations,
- la gourde (1A - 1D) comprend un raccordement rotatif ou pivotant (S) entre les parties de bouteille (10, 11), par lequel les deux parties de bouteille (10, 11) peuvent être tournées ou pivotées l'une par rapport à l'autre autour d'un axe de rotation (R) s'étendant de manière oblique par rapport au moins à une des deux parties de bouteille (10, 11), et
- la gourde peut être transférée de la configuration dressée dans la configuration inclinée selon un angle de 180 degrés autour de l'axe de rotation (R) par rotation des deux parties de bouteille (10, 11) l'une par rapport à l'autre.

2. Gourde selon la revendication 1, **caractérisée en ce que** la première partie de bouteille (10) comprend une pièce de raccordement (101A - 101C) et la seconde partie de bouteille (11) comprend une pièce de raccordement (111A - 111C), dans laquelle les espaces intérieurs (100, 110) sont en communication fluidique l'un avec l'autre par l'intermédiaire des pièces de raccordement (101A - 101C, 111A - 111C) des deux parties de bouteille (10, 11).

3. Gourde selon la revendication 2, **caractérisée en ce que** les deux parties de bouteille (10, 11) sont fixées l'une sur l'autre par l'intermédiaire des pièces de raccordement (101A - 101C, 111A - 111C).

4. Gourde selon l'une quelconque des revendications précédentes, **caractérisée en ce que** l'axe de rotation (R) s'étend de manière inclinée par rapport à un axe longitudinal (L) d'au moins une des deux parties de bouteille (10, 11).

5. Gourde selon la revendication 5, **caractérisée en ce que** l'angle entre l'axe de rotation (R) et l'axe longitudinal (L) est compris entre 20 et 60 degrés, en particulier entre 30 et 40 degrés.

6. Gourde selon l'une quelconque des revendications précédentes, **caractérisée en ce que** la première partie de bouteille (10) comprend un fond (102), dans laquelle la plus petite distance entre le fond (102) et l'orifice de bouteille (13) peut être modifiée par le pivotement des parties de bouteille (10, 11) l'une par rapport à l'autre.

7. Gourde selon l'une quelconque des revendications précédentes, **caractérisée en ce qu'**au moins une des deux parties de bouteille (10, 11) est réalisée au moins par endroits en forme de cylindre avec un axe de cylindre, dans laquelle l'axe de cylindre s'étend de manière coaxiale par rapport à un axe longitudinal (L) d'au moins une des deux parties de bouteille (10, 11).

8. Gourde selon l'une quelconque des revendications précédentes, si elles renvoient à la revendication 3, **caractérisée en ce que** la première partie de bouteille (10) comprend une section de toit (104), sur laquelle la pièce de raccordement (101A - 101C) de la première partie de bouteille (10) est réalisée et qui s'étend de manière oblique par rapport à un fond (102) de la première partie de bouteille (10).

9. Gourde selon la revendication 8,
**caractérisée en ce que** la deuxième partie de bouteille (11) comprend une section de fond (112), qui s'étend de manière adjacente et de manière parallèle à la section de toit (104) de la première partie de bouteille (10).

10. Gourde selon l'une quelconque des revendications précédentes, si elles renvoient à la revendication 3, **caractérisée en ce que** les pièces de raccordement (101A - 101C, 111A - 111C) des deux parties de bouteille (10, 11) réalisent conjointement le raccordement par pivotement (S).

11. Gourde selon l'une quelconque des revendications précédentes, si elles renvoient à la revendication 3, **caractérisée en ce que** les deux pièces de raccordement (101A - 101C, 111A - 111C) réalisent un raccordement par vissage.
